# DEMANDE DE BREVET EUROPEEN

(11) **EP 0 948 906 A1**
(43) Date de publication de la demande: **13.10.1999**
(21) Numéro de dépôt: 98440073.9
(22) Date de dépôt: 09.04.1998
(51) Int. Cl.: A23L 1/326, A23L 1/325

(54) **Procédé de traitement du muscle rouge des thonidés, en vue de la réalisation d'une préparation alimentaire**

(71) Demandeur: Saupiquet S.A., 44200 Nantes (FR)
(72) Inventeur: Bernard Jacques, 44260 Saveney (FR); Vouille Dominique, 44200 Reze (FR)
(74) Mandataire: Arbousse-Bastide, Jean-Claude Philippe

(57) **Abrégé**

Procédé de traitement du muscle rouge des thonidés, en vue de la réalisation d'une préparation alimentaire.

Il consiste à faire subir au muscle rouge un traitement comportant les étapes successives suivantes : séparation mécanique permettant d'obtenir une pulpe, un ou plusieurs lavages successifs de ladite pulpe, suivis chacun d'un dégrillage, puis un lavage suivi d'un raffinage et d'un décantage afin d'obtenir une matière plus sèche.

## Description

La présente invention a pour objet un procédé de traitement du muscle rouge, en vue de la réalisation d'une préparation alimentaire.

Un thon comprend une masse musculaire qui se divise en deux catégories, le muscle blanc et le muscle rouge.

Jusqu'à présent, seul le muscle blanc est destiné à l'alimentation humaine, le muscle rouge étant réservé à l'alimentation animale, notamment sous forme de farine.

En effet, la consommation du muscle rouge des thonidés par l'homme est actuellement peu courante car il présente de nombreux défauts qui sont, d'une part son hétérogénéité due à la présence notamment de débris d'arêtes, de tendons blancs longs, de résidus de peaux; d'autre part sa couleur noire ou brune peu appétissante, due à une forte concentration en myoglobine et en hémoglobine; d'autre part encore son odeur désagréable due à tout un ensemble de composés plus ou moins volatils, présents en quantité relativement importante, tels que, pour les plus importants, histidine, ansérine, créatinine, triméthylamine oxyde (TMAO), acide lactique, succinique, azote extractible total; et d'autre part encore la probabilité accentuée de présence de certains composés toxiques tels que les métaux lourds.

De plus, lors de la cuisson, particulièrement à une température élevée, telle que dans le cas d'une stérilisation, on obtient un produit peu appétissant, dégageant une odeur marquée, due notamment à des dégagements de produits soufrés.

Cette réaction est due essentiellement à la combinaison du TMAO, de la metmyoglobine et des résidus de cystéine, libres ou constituants de la myoglobine et des autres protéines, et à l'oxydation des ferrohémochrome en ferrihémochromes.

Tous ces inconvénients ont conduit jusqu'à présent à écarter le muscle rouge de l'alimentation humaine, toutefois, celui-ci représente une proportion importante de la masse musculaire du thon, 20 % pour l'albacore, et sa composition a des valeurs nutritionnelles aussi intéressantes que celles qui composent le muscle blanc, le muscle rouge est en effet riche en protéines et pauvre en lipide.

Dans le but de valoriser le muscle rouge des thonidés, et de l'incorporer dans l'alimentation humaine, notamment sous forme de charcuterie de poisson, la Demanderesse s'est attachée à mettre au point un procédé de décoloration du muscle rouge, pour en extraire les éléments qui le rendent peu agréable au consommateur, notamment après cuisson, à savoir les pigments.

Le procédé objet de la présente invention se rapproche de ceux, connus, d'obtention du produit appelé communément "surimi" généralement à base de poissons à chair blanche, il en diffère toutefois par des conditions particulières à respecter.

Le procédé objet de la présente invention se caractérise essentiellement en ce qu'il consiste à faire subir au muscle rouge des thonidés un traitement comportant les étapes successives suivantes : séparation mécanique permettant d'obtenir une pulpe, un ou plusieurs lavages successifs de ladite pulpe, suivis chacun d'un dégrillage, puis un lavage à l'eau suivi d'un raffinage et d'un décantage afin d'obtenir une matière plus sèche.

Selon une caractéristique additionnelle du procédé selon l'invention, le mucle rouge est travaillé cru à l'état frais, éventuellement après réfrigération, ou après congélation/décongélation.

Les lavages successifs de la pulpe permettent d'éliminer les pigments ainsi que la plus grande partie des produits solubles tels que le sang, les enzymes, le TMAO, la cystéine et les graisses, tandis que la dispersion fine de la matière permet d'augmenter la surface de contact entre la chair et l'eau pour améliorer la solvatation, et rompre les membranes des cellules musculaires afin de mieux éliminer les pigments.

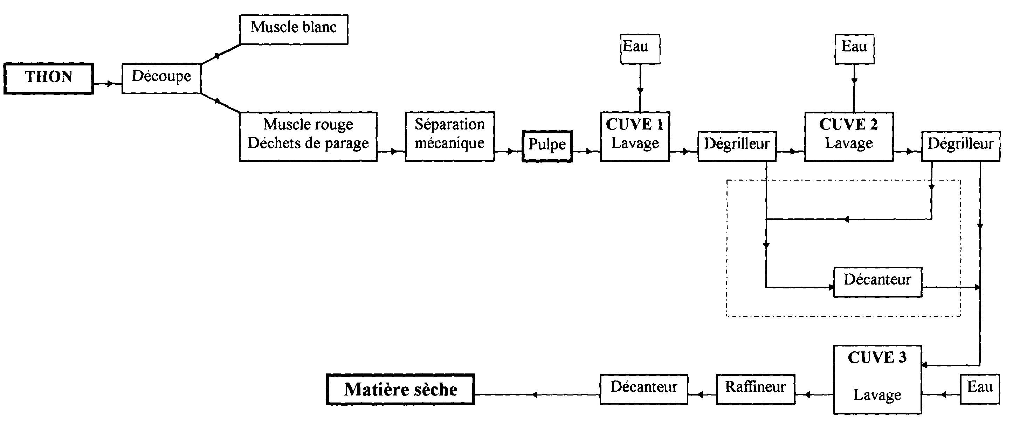

Les avantages et les caractéristiques de la présente invention ressortiront plus clairement de la description qui suit et qui se rapporte au dessin annexé, lequel en représente un mode de réalisation non limitatif.

Dans le dessin annexé la figure unique représente un diagramme illustrant le procédé selon l'invention.

Dans une première étape le thon est traité de manière classique, c'est-à-dire qu'il est découpé afin de prélever le muscle blanc, tandis que le muscle rouge et les autres déchets de parage sont écartés.

Le muscle rouge et éventuellement les déchets de parage, sont introduits dans un séparateur mécanique permettant d'en extraire les déchets tels que les arêtes, et d'obtenir une pulpe, principalement de muscle rouge.

La pulpe est ensuite placée dans une cuve 1 dans laquelle est ajoutée de l'eau, le tout étant agité. Dans un mode de réalisation préférentiel, le volume d'eau représente trois à cinq fois celui de la pulpe, cinq de préférence, la température de l'eau est de préférence de l'ordre de 4°C afin d'éviter les proliférations bactériennes, et l'opération d'agitation est réalisée pendant cinq minutes.

Après cette première opération de lavage le contenu de la cuve 1 est dirigé vers un dégrilleur permettant de séparer l'eau et la pulpe, cette dernière étant introduite dans une cuve 2 ou elle est lavée dans les mêmes conditions que dans la cuve 1, puis dégrillée.

La pulpe issue du deuxième lavage est introduite dans une cuve 3 où elle est lavée dans les mêmes conditions que lors des lavages précédents, puis elle est raffinée, puis décantée afin d'obtenir une matière sèche qui est utilisable dans une préparation alimentaire sous différentes formes.

On notera que l'eau provenant des deux dégrilleurs est décantée, et la matière solide recueillie est introduite dans la cuve 3 où elle est incorporée à la pulpe lavée issue du deuxième lavage.

On notera également que plusieurs variantes peuvent être apportées au procédé objet la présente invention.

Ce procédé peut ainsi comprendre d'autres lavages successifs, à savoir un quatrième, voire un cinquième, on a toutefois pu constater qu'à partir du troisième lavage la décoloration atteignait un seuil, en sorte que des lavages supplémentaires ne permettent qu'un éclaircissement non significatif de la matière.

D'autre part, il est possible d'accroître la décoloration en réalisant un décantage après chaque lavage, cependant ceci est difficilement applicable au niveau industriel.

D'autre part encore, le premier lavage peut être précédé d'un fractionnement plus petit de la pulpe, ce qui conduit à une décoloration accrue, le hachage devant toutefois être modéré afin d'éviter une trop grande perte de matière solide lors des lavage successifs.

D'autre part encore, on peut agir sur une agitation plus importante lors du premier lavage.

Il y lieu de remarquer que certaines conditions particulières de conditionnement sont à respecter, en fonction de l'espèce du thon traité.

En effet, on sait que les inconvénients que présente le muscle rouge sont accentués selon le mode de conditionnement du thon, et plus particulièrement lorsque le muscle rouge est congelé après la pêche, puis décongelé pour être travaillé.

On sait ainsi que la formation de metmyoglobine est minimisée par une congélation rapide à très basse température et une décongélation rapide, toutefois, sur les bateaux de pêche, la congélation est réalisée de manière lente en saumure.

En outre, il existe différentes qualités de muscle rouge selon l'espèce à laquelle appartient le thon. Ainsi, à titre d'exemple, il a été mis en évidence que le muscle rouge du listao, ou skipjack, se dégrade plus rapidement que celui des autres espèces de thon, notamment l'albacore, ou yellowfin.

Le procédé objet de l'invention ne présente aucun inconvénient pour du muscle rouge issu de thon du type albacore, qui a été soit réfrigéré après la pêche, soit congelé puis décongelé.

Par contre, il n'en est pas de même pour le muscle rouge du listao, lequel ne peut être traité que frais, c'est-à-dire immédiatement après la pêche, dans ce cas il est préférable que la ligne de traitement soit embarquée sur le bateau de pêche.

## Revendications

1. Procédé de traitement du muscle rouge des thonidés, en vue de la réalisation d'une préparation alimentaire, caractérisé en ce qu'il consiste à faire subir au muscle rouge un traitement comportant les étapes successives suivantes : séparation mécanique permettant d'obtenir une pulpe, un ou plusieurs lavages successifs de ladite pulpe, suivis chacun d'un dégrillage, puis un lavage suivi d'un raffinage et d'un décantage afin d'obtenir une matière plus sèche.

2. Procédé selon la revendication 1 caractérisé en ce que chacun des lavages est réalisé dans trois à cinq volumes d'eau à 4° C, et pendant une durée de cinq minutes.

3. Procédé selon la revendication 2 caractérisé en ce que chacun des lavages est réalisé dans cinq volumes d'eau.

4. Procédé selon l'une quelconque des revendications caractérisé en ce que l'eau de lavage récupérée après les dégrillages est décantée, et la matière sèche récupérée est incorporée à la pulpe avant le dernier lavage.

5. Procédé selon l'une quelconque des revendications précédentes caractérisé en ce que le premier lavage est accompagné d'une forte agitation.

6. Procédé selon l'une quelconque des revendications précédentes caractérisé en ce que chaque dégrillage est suivi d'une opération de décantage.

7. Procédé selon l'une quelconque des revendications précédentes caractérisé en ce que le premier lavage est précédé d'un hachage modéré de la pulpe.

8. Procédé selon l'une quelconque des revendications précédentes, caractérisé en ce que le muscle rouge est travaillé cru à l'état frais après réfrigération, ou après congélation/décongélation.

9. Procédé selon l'une quelconque des revendications de 1 à 10, caractérisé en ce que le muscle rouge du listao est travaillé cru à l'état frais.
